# EUROPÄISCHE PATENTSCHRIFT

(11) **EP 4 091 011 B1**
(45) Veröffentlichungstag und Bekanntmachung des Hinweises auf die Patenterteilung: **21.02.2024**
(21) Anmeldenummer: 20824182.8
(22) Anmeldetag: 09.12.2020
(51) Int. Cl.: G02B 21/26

(54) **VERSTELLVORRICHTUNG**
ADJUSTING DEVICE
DISPOSITIF D'AJUSTEMENT

(30) Priorität: 20.12.2019 DE 102019220429
(43) Veröffentlichungstag der Anmeldung: 23.11.2022
(73) Patentinhaber: Physik Instrumente (PI) GmbH & Co. KG, 76228 Karlsruhe (DE)
(72) Erfinder: BOCHER, Thomas, 76227 Karlsruhe (DE); RAU, Lukas, 76337 Waldbronn (DE); NAVRATIL, Tomas, 76137 Karlsruhe (DE); ERNST, Michael, 75334 Straubenhardt (DE); GRABOWSKI, Axel, 71277 Rutesheim (DE); SCHULZ, Matthias, 76337 Waldbronn (DE)
(74) Vertreter: Grünecker Patent- und Rechtsanwälte PartG mbB
(86) Internationale Anmeldenummer: PCT/EP2020/085260
(87) Internationale Veröffentlichungsnummer: WO 2021/122215

(56) Entgegenhaltungen:
- DE-U1-202009 017 832
- DE-U1-202014 010 480
- Physik-Instrumente: "User Manual P-725 PIFOC Long-Travel Objective Scanner P-725.xDD PIFOC High-Dynamics Piezo Scanner 2017-08-25 P725T0010, valid for P-725 Contents", , 25. August 2017 (2017-08-25), Seiten 1-25, XP055778734, Gefunden im Internet: URL:https://usermanual.wiki/Physik-Instrum ente/P725UserManualP725T0010pdf.1449407114 .pdf [gefunden am 2021-02-23]

## Beschreibung

Die vorliegende Erfindung betrifft eine Verstellvorrichtung zum Positionieren eines Objekts.

Bei Mikroskopen finden Verstellvorrichtungen in Form von Objektivverstellern Verwendung. Herkömmliche Durchlicht- oder Auflichtmikroskope umfassen in der Regel mehrere auf einem drehbaren Objektivrevolver montierte Objektive, wovon wenigstens eines mit einem solchen Objektivversteller versehen sein kann. Aufgrund der Drehfunktion des Objektivrevolvers kann das gewünschte Objektiv zwischen Okular und Präparat positioniert werden, wobei mit Hilfe des Objektivverstellers eine motorisierte Bewegung des entsprechenden Objektivs entlang seiner Fokusrichtung realisiert werden kann.

Über eine Zuleitung findet eine Energie- bzw. Signalübertragung von bzw. zu einer Basis des Objektivverstellers statt, um ein Objektiv, das mit der Basis verbunden ist, entlang seiner Fokusrichtung positionsgeregelt zu bewegen. Aufgrund der Höhe der anliegenden Spannungen und der Störanfälligkeit der Signalübertragung ist die Zuleitung bei herkömmlichen Objektivverstellern fest mit der Basis verbunden.

Eine Verstelleinrichtung nach dem Stand der Technik ist aus dem "User Manual P-725 PIFOC Long-Travel Objective Scanner" der Firma Physik Instrumente (OI) GmbH & Co. KG bekannt.

Als nachteilig hat sich dabei herausgestellt, dass die Kabel der Zuleitung bei einer unvorhergesehenen Drehung des Objektivrevolvers, wie sie beispielsweise bei einer Initialisierung nach Neustart auftritt, schädigende mechanische Kräfte erfahren. Die durch den kompakten Bauraum gering dimensionierte Zugentlastung der Kabel kann nicht in jedem Fall der mechanischen Belastung die Kräfte wie notwendig aufnehmen. Folglich kommt es zum Kabelbruch oder anderweiten Beschädigungen der Stromversorgungs- bzw. Energieübertragungsleitung(en) und/oder der sensiblen Sensor- bzw. Signalübertragungsleitung(en).

Daher ist es die Aufgabe der vorliegenden Erfindung, eine Verstellvorrichtung bereitzustellen, die eine dauerhafte Zuverlässigkeit und Langlebigkeit der Energie- und/oder Signalübertragungsleitung(en) garantiert sowie die Handhabung erleichtert.

Zur Lösung dieser Aufgabe stellt die vorliegende Erfindung die Verstellvorrichtung zum Positionieren eines Objekts nach Anspruch 1 bereit, umfassend: eine Basis, die ausgebildet ist, um ein mit der Basis verbindbares Objekt im verbundenen Zustand positionsgeregelt entlang einer Bewegungsbahn zu bewegen, und eine Zuleitung zur Energie- und/oder Signalübertragung zu und/oder von der Basis, wobei die Zuleitung reversibel lösbar mit der Basis gekoppelt ist. Durch diese Ausführung löst sich die Zuleitung bei Überschreiten einer bestimmten Zug- oder Druckkraft, die auf die Zuleitung wirkt, von der Basis, wodurch eine Beschädigung der Zuleitung und/oder der Basis verhindert wird. Zusätzlich bietet sich der Vorteil, dass die Zuleitung manuell von der Basis gelöst werden kann bzw. mit der Basis verbunden werden kann, was die Handhabung bei der Montage der Verstellvorrichtung erleichtert.

Erfindungsgemäß weist die Verstellvorrichtung eine Kopplungseinrichtung auf, über die die Zuleitung reversibel lösbar mit der Basis gekoppelt ist, umfassend einen ersten Kopplungsabschnitt, der fest mit der Basis verbunden ist, und einen zweiten Kopplungsabschnitt, der fest mit der Zuleitung verbunden ist. Mit der Verbindungseinrichtung kann eine eindeutige Schnittstelle bereitgestellt werden, an der die Zuleitung bei Überschreiten der bestimmten Zug- oder Druckkraft von der Basis gelöst werden kann.

Erfindungsgemäß ist zumindest ein Teil des ersten Kopplungsabschnitts drehbar ausgeführt, sodass der zweite Kopplungsabschnitt relativ zur Basis in verschiedenen Orientierungen mit dem ersten Kopplungsabschnitt gekoppelt werden kann.

Vorteilhafte Ausführungen der beanspruchten Erfindung sind Gegenstände der abhängigen Ansprüche.

Es kann sinnvoll sein, wenn eine Kopplungsachse, entlang welcher der erste und zweite Kopplungsabschnitt koppelbar und/oder entkoppelbar sind, senkrecht zu der Bewegungsbahn ausgerichtet ist. Im Anwendungsfall Mikroskopie rotiert die Verstellvorrichtung in Form eines Objektivverstellers um eine Achse, die näherungsweise parallel zur Bewegungsbahn ist. Durch eine Ausrichtung der Kopplungsachse senkrecht zur Bewegungsbahn wirken die Zug- bzw. Druckkräfte, die auf die Zuleitung ausgeübt werden, unter günstigen Bedingungen auf die Kopplungseinrichtung ein, sodass die definierte Lösbarkeit des ersten Kopplungsabschnitts vom zweiten Kopplungsabschnitts verbessert wird.

Es kann sich überdies als praktisch erweisen, wenn eine Teilungsebene, entlang welcher der erste und zweite Kopplungsabschnitt geteilt sind, parallel zu der Bewegungsbahn ausgerichtet ist. Diese Konfiguration trägt ebenfalls zu günstigen Kräftebedingungen an der Kopplungseinrichtung bei, was die definierte Lösbarkeit des ersten Kopplungsabschnitts vom zweiten Kopplungsabschnitt verbessert.

Es kann sich als vorteilhaft erweisen, wenn die Kopplungseinrichtung auf einer von der Bewegungsbahn abgewandten Fläche der Basis angeordnet ist. Eine derartige Fläche der Basis ist leicht zugänglich und ermöglicht eine einfache manuelle Kopplung oder Entkopplung des ersten und zweiten Kopplungsabschnitts.

Es kann nützlich sein, wenn der erste und der zweite Kopplungsabschnitt magnetisch gekoppelt sind. Dadurch kann eine einfache und sichere Kopplung und Entkopplung realisiert werden.

Es kann auch von Nutzen sein, wenn wenigstens einer der beiden Kopplungsabschnitte wenigstens einen Permanentmagneten oder wenigstens einen Elektromagneten aufweist. Mithilfe eines Permanentmagneten kann eine einfache manuelle Kopplung oder Entkopplung erreicht werden. Da ein Elektromagnet über eine geeignete Steuerung gezielt aktiviert bzw. deaktiviert werden kann, besteht die Möglichkeit die Koppelbarkeit bzw. eine automatische Entkopplung an verschiedene, von der Steuerung erfasste Randbedingungen zu knüpfen. Beispielsweise kann die Steuerung eine automatische Entkopplung auslösen, wenn ein bestimmter Rotationswinkel der Verstellvorrichtung um ihre Rotationsachse überschritten wird.

Es kann von Vorteil sein, wenn die beiden Kopplungsabschnitte mittels Reibschluss oder Formschluss miteinander koppelbar sind. Hierbei kann es insbesondere vorteilhaft sein, wenn einer der beiden Kopplungsabschnitte, vorzugsweise der erste Kopplungsabschnitt, als weiblicher Kopplungsabschnitt, und der andere der beiden Kopplungsabschnitte als männlicher Kopplungsabschnitt ausgebildet ist.

Es kann sich auch als praktisch erweisen, wenn der weibliche Kopplungsabschnitt als Steckeraufnahme mit Vertiefungen und/oder Vorsprüngen ausgebildet ist und der männliche Kopplungsabschnitt als Stecker mit Vertiefungen und/oder Vorsprüngen ausgebildet ist. Durch die Ausführung derartiger Pins und Einsteckbuchsen kann die Berührsicherheit gemäß CE-Norm gewährleistet werden.

Es kann sich als nützlich erweisen, wenn Kontakte für die Energie- und/oder Signalübertragung in beiden Kopplungsabschnitten kreisförmig angeordnet sind. Durch diese Anordnung und entsprechende Abstände der Kontakte ist eine Überschlagsicherheit sowie eine hohe Signalqualität des Sensorsignals gegeben.

Es kann überdies von Vorteil sein, wenn der drehbar ausgeführte Teil des ersten Kopplungsabschnitts in verschiedenen Drehstellungen arretierbar ausgeführt ist.

Es kann sinnvoll sein, wenn die Basis eine Antriebseinheit umfasst, die ausgebildet ist, das Objekt, vorzugsweise in Form eines Objektivs, aufzunehmen und entlang der Bewegungsbahn zu bewegen, und einen Positionssensor, der ausgebildet ist, die Position des Objekts entlang der Bewegungsbahn zu erfassen, wobei die Bewegungsbahn vorzugsweise entlang der Fokusrichtung des Objektivs verläuft.

Es kann von Nutzen sein, wenn die Antriebseinheit ein piezoelektrischer Motor ist.

Es kann sich als praktisch erweisen, wenn die Zuleitung mehrere getrennte Leitungen zur Energie-und/oder Signalübertragung in einer gemeinsamen Hülle umfasst.

Es kann vorteilhaft sein, wenn die Zuleitung einen Stecker zur Verbindung mit einer externen Einrichtung aufweist. Dadurch kann eine einfache Verbindung mit der externen Einrichtung hergestellt werden.

Weitere Ausführungsformen ergeben sich durch Kombination der vorteilhaften Ausführungen.

Obwohl die Verstellvorrichtung im Wesentlichen mit Bezug auf einen Objektivversteller beschrieben wird, ist die Erfindung auf sämtliche Verstellvorrichtungen übertragbar, welche dazu ausgebildet sind, ein Objekt entlang einer Bewegungsbahn positionsgeregelt zu bewegen.

### Kurze Beschreibung der Figuren

Es zeigen:
Fig. 1A und 1B eine erste, nicht erfindungsgemäße, Ausführungsform der Verstellvorrichtung in Form eines Objektivverstellers, bei der der erste Kopplungsabschnitt an einer der Bewegungsbahn abgewandten Seitenfläche der Basis angeordnet ist.
Fig. 2 und 3 jeweils eine Modifikation der ersten Ausführungsform der Verstellvorrichtung, bei der der erste Kopplungsabschnitt jeweils an einer anderen Seitenfläche der Basis angeordnet ist.
Fig. 4A bis 4D eine zweite, erfindungsgemäße, Ausführungsform der Verstellvorrichtung in Form eines Objektivverstellers, bei der zumindest ein Teil des ersten Kopplungsabschnitts dreh- und arretierbar ausgeführt ist, sodass der zweite Kopplungsabschnitt relativ zur Basis in verschiedenen Orientierungen mit dem ersten Kopplungsabschnitt gekoppelt werden kann.
Fig. 5A und 5B eine dritte, nicht erfindungsgemäße, Ausführungsform der Verstellvorrichtung in Form eines Objektivverstellers, bei der der erste Kopplungsabschnitt über ein Kabel zur Energie-und Signalübertragung mit der Basis verbunden ist.

### Detaillierte Beschreibung der bevorzugten Ausführungsbeispiele

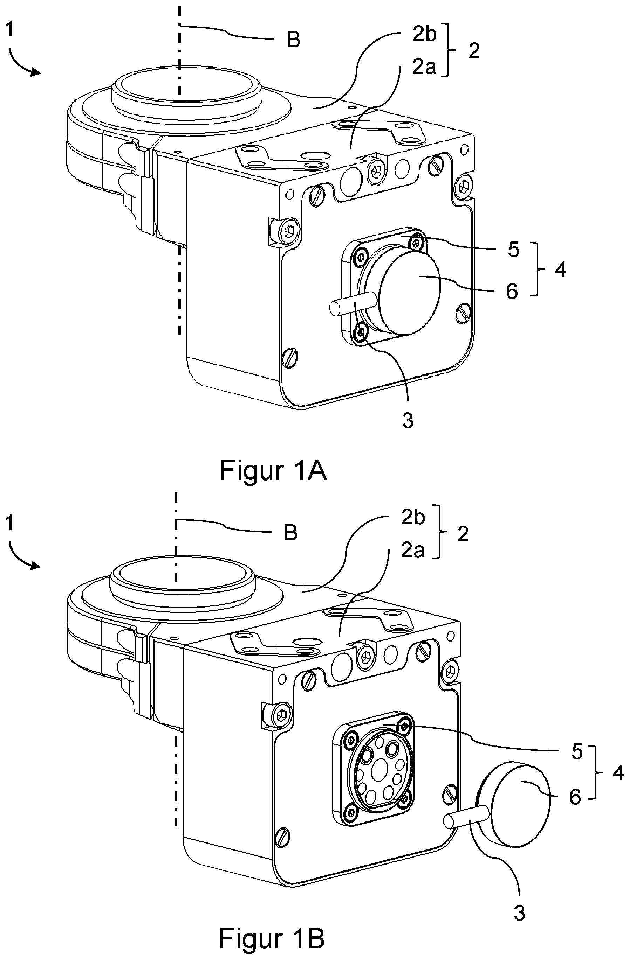

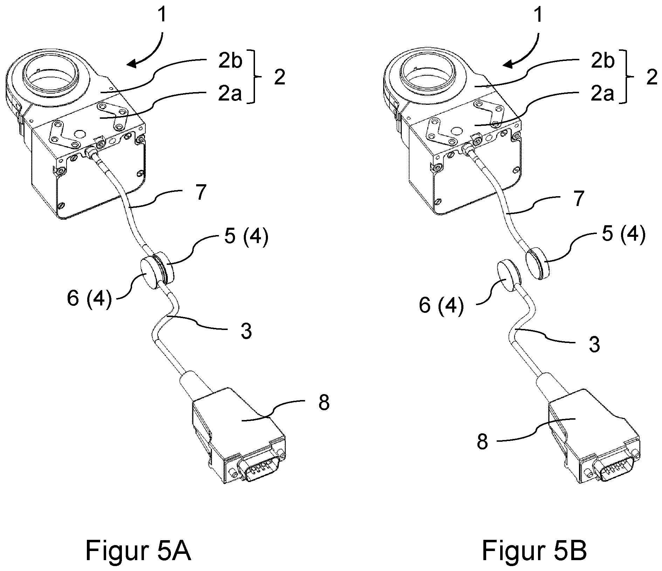

Eine erste Ausführungsform einer Verstellvorrichtung in Form eines Objektivverstellers 1, die nicht unter die vorliegende Erfindung fällt, aber hilfreich für das Verständnis der Erfindung ist, ist in den Fig. 1A und 1B gezeigt. Der Objektivversteller 1 umfasst eine Basis 2, die aus einem Basis-Hauptkörper 2a und einer Antriebseinheit 2b besteht. Der Basis-Hauptkörper 2a ist näherungsweise quaderförmig ausgebildet und über eine Seitenfläche mit der Antriebseinheit 2b verbunden. Die Antriebseinheit 2b umfasst eine ringförmige Aufnahme, die ausgebildet ist, ein Objektiv aufzunehmen. Das Objektiv kann beispielsweise in die ringförmige Aufnahme eingeschraubt, eingepresst oder eingeklebt werden. Das aufgenommene Objektiv kann von der Basis 2 entlang einer Bewegungsbahn B positionsgeregelt bewegt werden. Dazu umfasst die Basis 2 zusätzlich einen Positionssensor. Weiterhin umfasst der Objektivversteller 1 eine Zuleitung 3 zur Energie- und/oder Signalübertragung zu und/oder von der Basis 2, wobei die Zuleitung 3 aus mehreren einzelnen Leitungen gebildet sein kann, die in einer gemeinsamen Hülle aufgenommen sind. Vorzugsweise umfasst die Zuleitung 3 an dem der Basis abgewandten Ende einen Stecker 8 (siehe Fig. 5A und 5B) zur Verbindung mit einer externen Einrichtung, insbesondere einer Energie- und Signalquelle. Die Zuleitung 3 ist reversibel lösbar mit dem Basis-Hauptkörper 2a gekoppelt. Insbesondere wird diese Lösbarkeit über eine Kopplungseinrichtung 4 realisiert. Dazu besteht die Kopplungseinrichtung 4 aus einem ersten Kopplungsabschnitt 5 und einem zweiten Kopplungsabschnitt 6, die im gekoppelten Zustand eine Energie-und Signalübertragung zwischen Zuleitung 3 und Basis 2 ermöglichen.

In der vorliegenden Ausführungsform ist der erste Kopplungsabschnitt 5 an einer rückseitigen bzw. einer der Bewegungsbahn B abgewandten Außenfläche des Basis-Hauptkörpers 2a angeordnet. Der erste Kopplungsabschnitt 5 besteht aus einer Platte, die auf der Außenfläche des Basis-Hauptkörpers 2a vorzugsweise durch Schraubverbindungen befestigt ist, und einem hohlzylinderförmigen Vorsprung in Form eines umlaufenden Stegs, der von der Platte hervorsteht. Der erste Kopplungsabschnitt 5 ist als weiblicher Kopplungsabschnitt ausgeführt. Dazu sind in einem Bereich der Platte, der von dem umlaufenden Steg umschlossen wird, Vertiefungen bzw. Einsteckbuchsen ausgebildet, die Kontakte für die Energie-und Signalübertragung bilden. Die Vertiefungen sind dabei vorzugsweise kreisförmig und konzentrisch zum umlaufenden Steg ausgebildet.

Der zweite Kopplungsabschnitt 6 ist als flacher Zylinder ausgeführt und stellt einen männlichen Kopplungsabschnitt dar. Eine Stirnfläche des Zylinders weist dabei stiftartige Vorsprünge bzw. Pins auf, die als Kontakte für die Energie-und Signalübertragung ausgebildet sind und im gekoppelten Zustand in die Einsteckbuchsen des ersten Kopplungsabschnitts 5 eingesteckt sind. Die Zuleitung 3 tritt über die Mantelfläche des zylinderförmigen zweiten Kopplungsabschnitts 6 in das Innere des zweiten Kopplungsabschnitts 6 ein, wobei die einzelnen Leitungen der Zuleitung 3 mit den entsprechenden Pins in Verbindung stehen. Zudem weist der zweite Kopplungsabschnitt 6 eine umlaufende Nut auf der Stirnfläche auf, auf der auch die Pins bereitgestellt sind. Im gekoppelten Zustand befindet sich der umlaufende Steg des ersten Kopplungsabschnitts 5 mit der umlaufenen Nut des zweiten Kopplungsabschnitts 6 im Eingriff.

Vorzugsweise sind die Einsteckbuchsen des ersten Kopplungsabschnitts 5 und die Pins des zweiten Kopplungsabschnitts 6, welche die Kontakte für die Energie-und Signalübertragung bilden, beispielsweise durch verschiedene Durchmesser so ausgebildet, dass der erste Kopplungsabschnitt 5 und der zweite Kopplungsabschnitt 6 nur in einer einzig möglichen Orientierung zueinander gekoppelt werden können. Dadurch wird sichergestellt, dass die Kontakte bezüglich ihrer Art, d. h. Energie- oder Signalübertragungskontakt, und im Falle von Energieübertragungskontakten bezüglich ihrer Polung bestimmungsgemäß verbunden werden.

Um eine sichere Kopplung der beiden Kopplungsabschnitte 5, 6 zu gewährleisten, kann mindestens einer der Kopplungsabschnitte 5, 6 als Magnet ausgeführt sein oder magnetische Elemente umfassen, sodass die beiden Kopplungsabschnitte 5, 6 magnetisch gekoppelt werden können. Dabei kann es sich sowohl um Permanent- als auch Elektromagneten handeln. Alternativ ist es auch möglich, dass die beiden Kopplungsabschnitte 5, 6 allein durch mechanische Klemmung, beispielsweise durch Ausführung mindestens eines Kopplungselements in Form einer Kugelpfanne, einem Haftreibelement oder einem Federelement, realisiert werden.

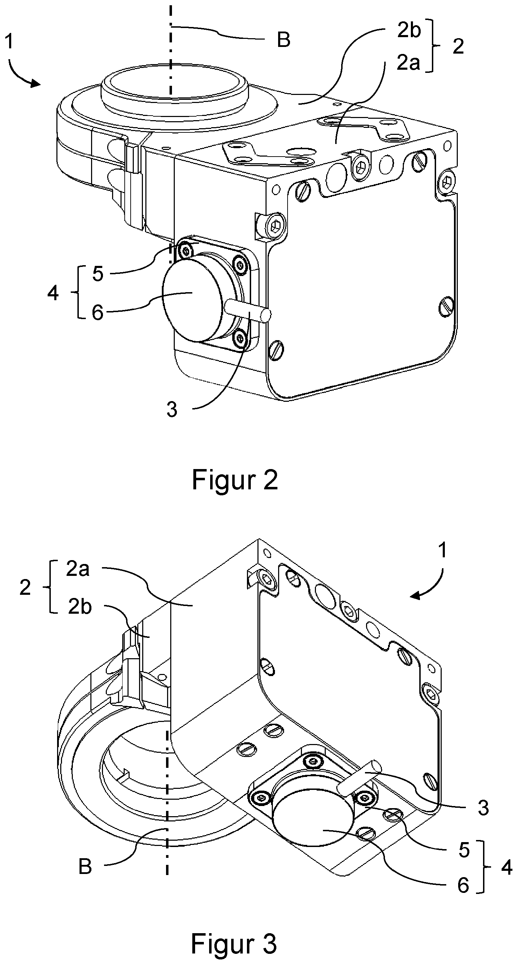

Die Ausführungsform ist nicht auf eine Konfiguration beschränkt, in der der erste Kopplungsabschnitt 5 an einer rückseitigen Außenfläche des Basis-Hauptkörpers 2a angeordnet ist. Insbesondere kann der erste Kopplungsabschnitt 5 je nach Anwendungsfall auch an anderen Flächen des Basis-Hauptkörpers 2a angeordnet sein, wie Fig. 2 und 3 beispielhaft zeigen.

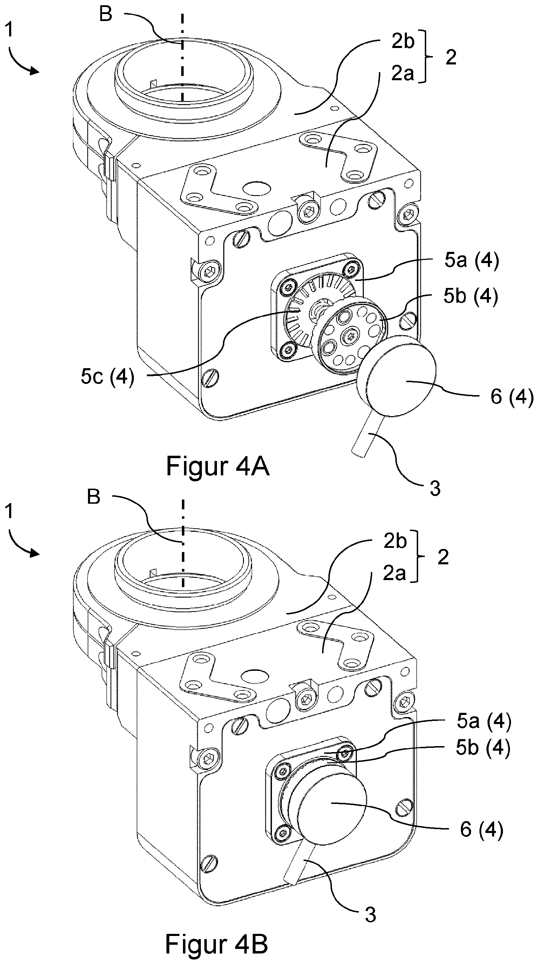

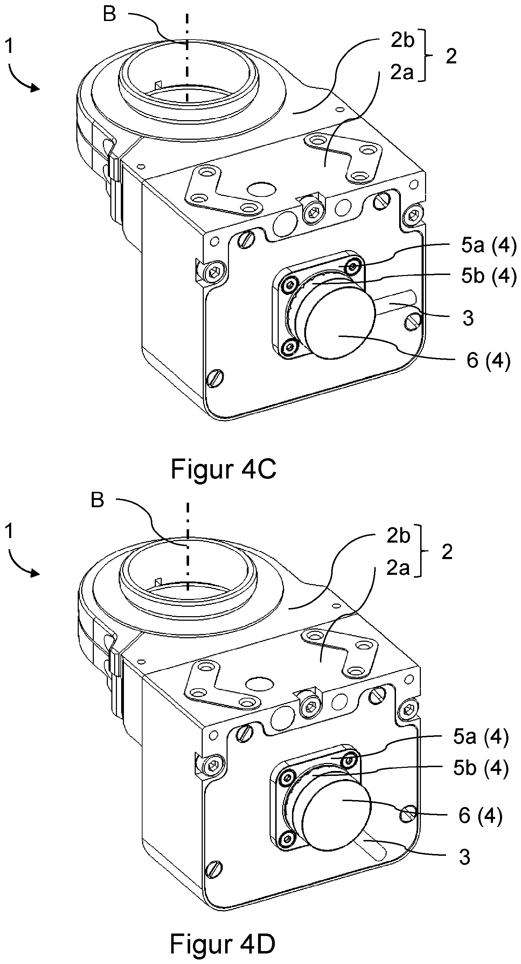

In Fig. 4A ist eine zweite, erfindungsgemäße, Ausführungsform der Verstellvorrichtung in Form eines Objektivverstellers 1 gezeigt, in der zumindest ein Teil des ersten Kopplungsabschnitts 5 dreh- und arretierbar ausgeführt ist. Insbesondere besteht der erste Kopplungsabschnitt dazu aus einer Grundplatte 5a, einem drehbaren Aufsatz 5b und einer Zugfeder 5c, welche den drehbaren Aufsatz 5b gegen die Grundplatte 5a spannt. Die Grundplatte 5a ist wie in der ersten Ausführungsform an einer Seitenfläche des Basis-Hauptkörpers 2a befestigt. An der vom Basis-Hauptkörper 2a abgewandten Fläche ist die Grundplatte 5a mit kreisförmig angeordneten und gleichmäßig beabstandeten Vorsprüngen versehen. Der drehbare Aufsatz 5b ist als flacher Hohlzylinder mit Boden ausgeführt und weist auf der der Grundplatte 5a zugewandten Fläche des Bodens entsprechende Vertiefungen bzw. Rasten auf, die im nicht ausgelenkten Zustand der Feder 5c mit den Vorsprüngen der Grundplatte 5a in Eingriff stehen. Die Kontakte für die Energie-und Signalübertragung sind im Boden des drehbaren Aufsatzes 5b bereitgestellt. Die Feder 5c verbindet die Zentren der Grundplatte 5a und des drehbaren Aufsatzes 5b. Durch eine axiale Auslenkung der Feder 5c kann der drehbare Aufsatz 5b gegen die Vorspannung der Feder 5c von der Grundplatte 5a abgehoben werden. In diesem Zustand kann der drehbare Aufsatz 5b gedreht werden und in einer beliebigen, den Vorsprüngen und Rasten entsprechenden Orientierung wieder mit der Grundplatte 5a in Eingriff gebracht werden sobald der Federspannung nachgegeben wird. Im nicht ausgelenkten Zustand der Feder 5c ist der drehbare Aufsatz 5b verdrehsicher mit der Grundplatte 5a verbunden.

Es versteht sich von selbst, dass die Vorsprünge und Rasten beliebige Formen aufweisen können, solange sie miteinander in Eingriff gebracht werden können. Weiterhin kann auch der drehbare Aufsatz 5b die Vorsprünge und die Grundplatte 5a die Vertiefungen oder eine Kombination davon aufweisen. In der vorliegenden Ausführungsform umfasst die Grundplatte 24 Vorsprünge und der drehbare Aufsatz entsprechend 24 Rasten, sodass der drehbare Aufsatz 5b in 24 verschiedenen Positionen relativ zur Grundplatte 5a orientiert werden kann. Entsprechend kann der zweite Kopplungsabschnitt 6 in 24 verschiedenen Positionen relativ zum Basis-Hauptkörper 2a orientiert werden. Die Anzahl der verschiedenen Positionen ist beispielhaft und kann durch Anpassung der Anzahl und des Abstandes der Vorsprünge und Rasten dem jeweiligen Anwendungsfall angepasst werden. Insbesondere können auch Arretierungen in vier, um 90° verschiedenen Positionen sinnvoll sein.

Fig. 4B bis 4D zeigen beispielhaft verschiedene Orientierungen des zweiten Kopplungsabschnitts 6 relativ zum Basis-Hauptkörper 2a.

Eine dritte, nicht erfindungsgemäße, Ausführungsform der Verstellvorrichtung in Form eines Objektivverstellers 1 ist in den Fig. 5A und 5B gezeigt. Bei dieser Ausführungsform ist der erste Kopplungsabschnitt 5 nicht unmittelbar an einer Außenfläche des Basis-Hauptkörpers 2a angebracht, sondern über ein Kabel 7 zur Energie- und Signalübertragung mit der Basis 2 an der nach vorne weisenden Seite bzw. Außenfläche des Basis-Hauptkörpers 2a verbunden. Es ist denkbar, dass das Kabel 7 auch an einer der anderen Seiten bzw. Außenflächen des Basis-Hauptkörpers angeordnet ist. Der erste Kopplungsabschnitt 5 ist als flacher Zylinder ausgebildet und kann wie in den vorangehenden Ausführungsformen beschrieben mit dem zweiten Kopplungsabschnitt 6 gekoppelt werden. Analog zur Verbindung der Zuleitung 3 mit dem zweiten Kopplungsabschnitt 6, tritt das Kabel 7 über die Mantelfläche des Zylinders in den ersten Kopplungsabschnitt 5 ein, wobei die Verteilung der einzelnen Leitungen des Kabels 7 auf die entsprechenden Kontakte im Innern des ersten Kopplungsabschnitts 5 erfolgt. Fig. 5A zeigt die Kopplungsabschnitte 5 und 6 im gekoppelten Zustand, wohingegen Fig. 5B den ungekoppelten Zustand zeigt. Zudem zeigen die Fig. 5A und 5B den Stecker 8, der am anderen Ende der Zuleitung 3 angebracht ist und zur Verbindung der Zuleitung 3 mit einer externen Einrichtung dient.

### Bezugszeichenliste

- 1: Objektivversteller (Verstellvorrichtung)
- 2: Basis
- 2a: Basis-Hauptkörper
- 2b: Antriebseinheit
- 3: Zuleitung
- 4: Kopplungseinrichtung
- 5: erster Kopplungsabschnitt
- 5a: Grundplatte
- 5b: drehbarer Aufsatz
- 5c: Zugfeder
- 6: zweiter Kopplungsabschnitt
- 7: Kabel zur Energie- und Signalübertragung
- 8: Stecker
- B: Bewegungsbahn

## Patentansprüche

1. Verstellvorrichtung (1) zum Positionieren eines Objekts, umfassend: eine Basis (2), die ausgebildet ist, um ein mit der Basis (2) verbindbares Objekt im verbundenen Zustand positionsgeregelt entlang einer Bewegungsbahn (B) zu bewegen, und eine Zuleitung (3) zur Energie- und/oder Signalübertragung zu und/oder von der Basis (2), wobei die Zuleitung (3) reversibel lösbar mit der Basis (2) gekoppelt ist und die Verstellvorrichtung (1) eine Kopplungseinrichtung (4) aufweist, über die die Zuleitung (3) reversibel lösbar mit der Basis (2) gekoppelt ist, umfassend einen ersten Kopplungsabschnitt (5), der fest mit der Basis (2) verbunden ist, und einen zweiten Kopplungsabschnitt (6), der fest mit der Zuleitung (3) verbunden ist, wobei zumindest ein Teil des ersten Kopplungsabschnitts (5) drehbar ausgeführt ist, sodass der zweite Kopplungsabschnitt (6) relativ zur Basis (2) in verschiedenen Orientierungen mit dem ersten Kopplungsabschnitt (5) gekoppelt werden kann.

2. Verstellvorrichtung nach Anspruch 1, **dadurch gekennzeichnet, dass** eine Kopplungsachse, entlang welcher der erste und zweite Kopplungsabschnitt (5, 6) koppelbar und/oder entkoppelbar sind, senkrecht zu der Bewegungsbahn (B) ausgerichtet ist.

3. Verstellvorrichtung nach Anspruch 1 oder 2, **dadurch gekennzeichnet, dass** eine Teilungsebene, entlang welcher der erste und zweite Kopplungsabschnitt (5, 6) geteilt sind, parallel zu der Bewegungsbahn (B) ausgerichtet ist.

4. Verstellvorrichtung nach einem der vorangehenden Ansprüche, **dadurch gekennzeichnet, dass** die Kopplungseinrichtung (4) auf einer von der Bewegungsbahn (B) abgewandten Fläche der Basis (2) angeordnet ist.

5. Verstellvorrichtung nach einem der vorangehenden Ansprüche, **dadurch gekennzeichnet, dass** der erste und der zweite Kopplungsabschnitt (5, 6) magnetisch gekoppelt sind.

6. Verstellvorrichtung nach Anspruch 5, **dadurch gekennzeichnet, dass** wenigstens einer der beiden Kopplungsabschnitte (5, 6) wenigstens einen Permanentmagneten oder wenigstens einen Elektromagneten aufweist.

7. Verstellvorrichtung nach einem der vorangehenden Ansprüche, **dadurch gekennzeichnet, dass** die beiden Kopplungsabschnitte (5, 6) mittels Reibschluss oder Formschluss miteinander koppelbar sind.

8. Verstellvorrichtung nach Anspruch 7, **dadurch gekennzeichnet, dass** einer der beiden Kopplungsabschnitte (5, 6), vorzugsweise der erste Kopplungsabschnitt (5), als weiblicher Kopplungsabschnitt, und der andere der beiden Kopplungsabschnitte als männlicher Kopplungsabschnitt ausgebildet ist.

9. Verstellvorrichtung nach Anspruch 8, **dadurch gekennzeichnet, dass** der weibliche Kopplungsabschnitt als Steckeraufnahme mit Vertiefungen und/oder Vorsprüngen ausgebildet ist und der männliche Kopplungsabschnitt als Stecker mit Vertiefungen und/oder Vorsprüngen ausgebildet ist.

10. Verstellvorrichtung nach einem der vorangehenden Ansprüche, **dadurch gekennzeichnet, dass** Kontakte für die Energie- und/oder Signalübertragung in beiden Kopplungsabschnitten (5, 6) kreisförmig angeordnet sind.

11. Verstellvorrichtung nach einem der vorangehenden Ansprüche, **dadurch gekennzeichnet, dass** der drehbar ausgeführte Teil des ersten Kopplungsabschnitts (5) in verschiedenen Drehstellungen arretierbar ausgeführt ist.

12. Verstellvorrichtung nach einem der vorangehenden Ansprüche, **dadurch gekennzeichnet, dass** die Basis (2) eine Antriebseinheit (2b) umfasst, die ausgebildet ist, das Objekt, vorzugsweise in Form eines Objektivs, aufzunehmen und entlang der Bewegungsbahn (B) zu bewegen, und einen Positionssensor, der ausgebildet ist, die Position des Objekts entlang der Bewegungsbahn (B) zu erfassen, wobei die Bewegungsbahn (B) vorzugsweise entlang der Fokusrichtung des Objektivs verläuft.

13. Verstellvorrichtung nach Anspruch 12, **dadurch gekennzeichnet, dass** die Antriebseinheit (2b) ein piezoelektrischer Motor ist.

14. Verstellvorrichtung nach einem der vorangehenden Ansprüche, **dadurch gekennzeichnet, dass** die Zuleitung (3) mehrere getrennte Leitungen zur Energie-und/oder Signalübertragung in einer gemeinsamen Hülle umfasst.

15. Verstellvorrichtung nach einem der vorangehenden Ansprüche, **dadurch gekennzeichnet, dass** die Zuleitung (3) einen Stecker (8) zur Verbindung mit einer externen Einrichtung aufweist.

## Claims

1. Adjusting device (1) for positioning an object, comprising: a base (2) which is configured to move an object that is connectable to said base (2) in the connected state along a path of motion (B) in a position-controlled manner, and a supply line (3) for the energy and/or signal transmission to and/or from said base (2), wherein said supply line (3) is coupled to said base (2) in a reversibly detachable manner and said adjusting device (1) comprises a coupling device (4), via which said supply line (3) is coupled to said base (2) in a reversibly detachable manner, comprising a first coupling section (5) that is fixedly connected to said base (2) and a second coupling section (6) that is fixedly connected to said supply line (3), wherein at least a portion of said first coupling section (5) is configured to be rotatable, so that the second coupling section (6) can be coupled to the first coupling section (5) in different orientations relative to the base (2).

2. Adjusting device according to claim 1, **characterized in that** a coupling axis, along which said first and said second coupling section (5, 6) can be coupled and/or decoupled, is oriented to be perpendicular to said path of motion (B).

3. Adjusting device according to claim 1 or 2, **characterized in that** a dividing plane, along which said first and said second coupling sections (5, 6) are divided, is oriented to be parallel to said path of motion (B).

4. Adjusting device according to one of the preceding claims, **characterized in that** said coupling device (4) is arranged on a surface of said base (2) facing away from said path of motion (B).

5. Adjusting device according to one of the preceding claims, **characterized in that** said first and said second coupling section (5, 6) are coupled magnetically.

6. Adjusting device according to claim 5, **characterized in that** at least one of said two coupling sections (5, 6) comprises at least one permanent magnet or at least one electromagnet.

7. Adjusting device according to one of the preceding claims, **characterized in that** said two coupling sections (5, 6) can be coupled to one another by frictional engagement or a positive-fit connection.

8. Adjusting device according to claim 7, **characterized in that** one of said two coupling sections (5, 6), preferably said first coupling section (5), is configured as a female coupling section and the other of said two coupling sections as a male coupling section.

9. Adjusting device according to claim 8, **characterized in that** the female coupling section is configured as a connector receptacle with depressions and/or projections and the male coupling section is configured as a connector with depressions and/or projections.

10. Adjusting device according to one of the preceding claims, **characterized in that** contacts for the energy and/or signal transmission are arranged in the shape of a circle in both coupling sections (5, 6).

11. Adjusting device according to one of the preceding claims, **characterized in that** the portion of the first coupling section (5) configured to be rotatable is configured to be lockable at different rotational positions.

12. Adjusting device according to one of the preceding claims, **characterized in that** said base (2) comprises a drive unit (2b), that is configured to receive the object, preferably in the form of a lens and to move it along said path of motion (B), and a position sensor that is configured to detect the position of the object along said path of motion (B), where said path of motion (B) runs preferably along the direction of focus of the lens.

13. Adjusting device according to claim 12, **characterized in that** said drive unit (2b) is a piezoelectric motor.

14. Adjusting device according to one of the preceding claims, **characterized in that** said supply line (3) comprises several separate conductors for the energy and/or signal transmission in a common jacket.

15. Adjusting device according to one of the preceding claims, **characterized in that** said supply line (3) comprises a connector (8) for connection to an external device.

## Revendications

1. Dispositif de réglage (1) permettant de positionner un objet, comprenant : une base (2) conçue pour déplacer, à l'état relié et avec régulation de la position, un objet pouvant être relié à la base (2) le long d'un trajet de déplacement (B), et une ligne d'alimentation (3) permettant de transmettre de l'énergie et/ou un signal vers et/ou depuis la base (2), dans lequel la ligne d'alimentation (3) est couplée de manière amovible et réversible à la base (2) et le dispositif de réglage (1) présente un dispositif de couplage (4) par l'intermédiaire duquel la ligne d'alimentation (3) est couplée de manière amovible et réversible à la base (2), comprenant une première section de couplage (5) reliée de manière fixe à la base (2) et une seconde section de couplage (6) reliée de manière fixe à la ligne d'alimentation (3), dans lequel au moins une partie de la première section de couplage (5) est réalisée de manière rotative, de sorte que la seconde section de couplage (6) peut être couplée à la première section de couplage (5) selon différentes orientations par rapport à la base (2).

2. Dispositif de réglage selon la revendication 1, **caractérisé en ce qu'**un axe de couplage, le long duquel les première et seconde sections de couplage (5, 6) peuvent être couplées et/ou découplées, est orienté perpendiculairement au trajet de déplacement (B).

3. Dispositif de réglage selon la revendication 1 ou 2, **caractérisé en ce qu'**un plan de division le long duquel les première et seconde sections de couplage (5, 6) sont divisées est orienté parallèlement au trajet de déplacement (B).

4. Dispositif de réglage selon l'une quelconque des revendications précédentes, **caractérisé en ce que** le dispositif de couplage (4) est agencé sur une surface de la base (2) qui n'est pas tournée vers le trajet de déplacement (B).

5. Dispositif de réglage selon l'une quelconque des revendications précédentes, **caractérisé en ce que** les première et seconde sections de couplage (5, 6) sont couplées magnétiquement.

6. Dispositif de réglage selon la revendication 5, **caractérisé en ce qu'**au moins une des deux sections de couplage (5, 6) présente au moins un aimant permanent ou au moins un électroaimant.

7. Dispositif de réglage selon l'une quelconque des revendications précédentes, **caractérisé en ce que** les deux sections de couplage (5, 6) peuvent être couplées l'une à l'autre au moyen d'une liaison par friction ou d'une liaison par complémentarité de forme.

8. Dispositif de réglage selon la revendication 7, **caractérisé en ce qu'**une des deux sections de couplage (5, 6), de manière préférée la première section de couplage (5), est réalisée sous la forme d'une section de couplage femelle, et l'autre des deux sections de couplage est réalisée sous la forme d'une section de couplage mâle.

9. Dispositif de réglage selon la revendication 8, **caractérisé en ce que** la section de couplage femelle est réalisée sous la forme d'un logement de fiche avec des parties creuses et/ou des parties saillantes et la section de couplage mâle est réalisée sous la forme d'une fiche avec des parties creuses et/ou des parties saillantes.

10. Dispositif de réglage selon l'une quelconque des revendications précédentes, **caractérisé en ce que** les contacts destinés à la transmission d'énergie et/ou de signal sont agencés de manière circulaire au sein des deux sections de couplage (5, 6).

11. Dispositif de réglage selon l'une quelconque des revendications précédentes, **caractérisé en ce que** la partie réalisée de manière rotative de la première section de couplage (5) est réalisée de manière à pouvoir être bloquée dans différentes positions de rotation.

12. Dispositif de réglage selon l'une quelconque des revendications précédentes, **caractérisé en ce que** la base (2) comprend une unité d'entraînement (2b) conçue pour accueillir l'objet, de manière préférée sous la forme d'un objectif, et pour le déplacer le long du trajet de déplacement (B), et un capteur de position conçu pour détecter la position de l'objet le long du trajet de déplacement (B), dans lequel le trajet de déplacement (B) s'étend de manière préférée le long de la direction de focalisation de l'objectif.

13. Dispositif de réglage selon la revendication 12, **caractérisé en ce que** l'unité d'entraînement (2b) est un moteur piézoélectrique.

14. Dispositif de réglage selon l'une quelconque des revendications précédentes, **caractérisé en ce que** la ligne d'alimentation (3) comprend plusieurs lignes séparées permettant de transmettre l'énergie et/ou le signal au sein d'une enveloppe commune.

15. Dispositif de réglage selon l'une quelconque des revendications précédentes, **caractérisé en ce que** la ligne d'alimentation (3) présente une fiche (8) permettant une connexion à un dispositif externe.
